# EUROPEAN PATENT APPLICATION

(11) **EP 1 162 116 A2**
(43) Date of publication of application: **12.12.2001**
(21) Application number: 01113386.5
(22) Date of filing: 01.06.2001
(51) Int. Cl.: B60R 19/14, B60R 19/38, B60R 19/48, B62D 25/10

(54) **A motor-vehicle rear bumper which can be lowered**

(30) Priority: 09.06.2000 IT TO000553
(71) Applicant: ITALDESIGN-GIUGIARO S.p.A, 10121 Torino (IT)
(72) Inventor: Giugiaro, Fabrizio, 10024 Moncalieri (Torino) (IT)
(74) Representative: Fioravanti, Corrado

(57) **Abstract**

A rear bumper for a motor-vehicle with a rear hatch (10) for access to a load platform (11) is described; the bumper (12) has a central portion (14) which is movable between a raised, travelling position and a lowered position for facilitating access to the load platform. The central portion (14) comprises:
a rigid structure (15) slidable vertically between the lowered and raised positions, and
a pair of shell-like portions (16, 17) which are supported by the structure (15) and constitute the outer rear portion of the central unit (14); of these portions, an upper shell portion (16) is fixed to the structure (15) in order to translate together therewith, and a lower shell portion (17) is articulated, at separate points (32, 33), to the upper shell portion (16) and to an end of an arm (34), respectively, the arm (34) having its opposite end articulated (35) to the vehicle body.

## Description

The present invention relates to a rear bumper for a motor vehicle having a rear hatch for access to a load platform, in which the bumper has a central portion which is movable between a raised, travelling position and a lowered position in which access to the load platform is facilitated. A rear bumper of this type is known from GB-A-2 141 978.

An object of the present invention is to provide a motor-operated bumper which can be lowered and can adopt a fully-lowered position, even when the vehicle is parked in a manner such that the bumper is disposed over a pavement.

This and other objects and advantages which will be understood further from the following description are achieved, according to the present invention, by a rear bumper having the characteristics defined in the characterizing part of Claim 1.

Preferred embodiments of the invention are defined in the dependent claims.

The structural and functional characteristics of a preferred but non-limiting embodiment of the rear bumper according to the invention will now be described with reference to the appended drawings, in which:
Figure 1 is a rear perspective view of a motor vehicle provided with the rear bumper unit according to the present invention, in a condition in which the hatch is closed and the bumper is in the raised position,
Figure 2 is a perspective view of the motor vehicle of Figure 1, in which the hatch is in the open position and the bumper is in the raised position,
Figure 3 is a perspective view of the motor vehicle of Figure 1 with the rear hatch unit in the open position and the bumper in the lowered position to facilitate access to the load platform,
Figures 4, 5 and 6 are vertical, longitudinal sections showing the bumper in the conditions of Figures 1, 2 and 3, respectively, on an enlarged scale,
Figure 7 is a partially-sectioned, schematic plan view showing, on an enlarged scale, one of the end regions of the bumper in which it is connected to the vehicle body,

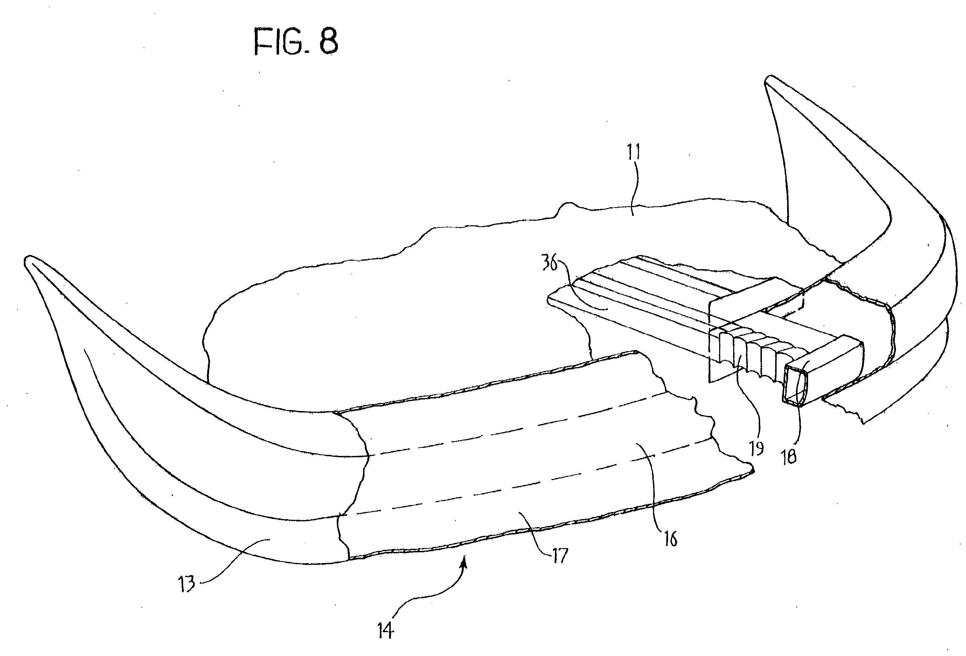

Figure 8 is a perspective view of the bumper, partially cut away to show some details of Figure 7,

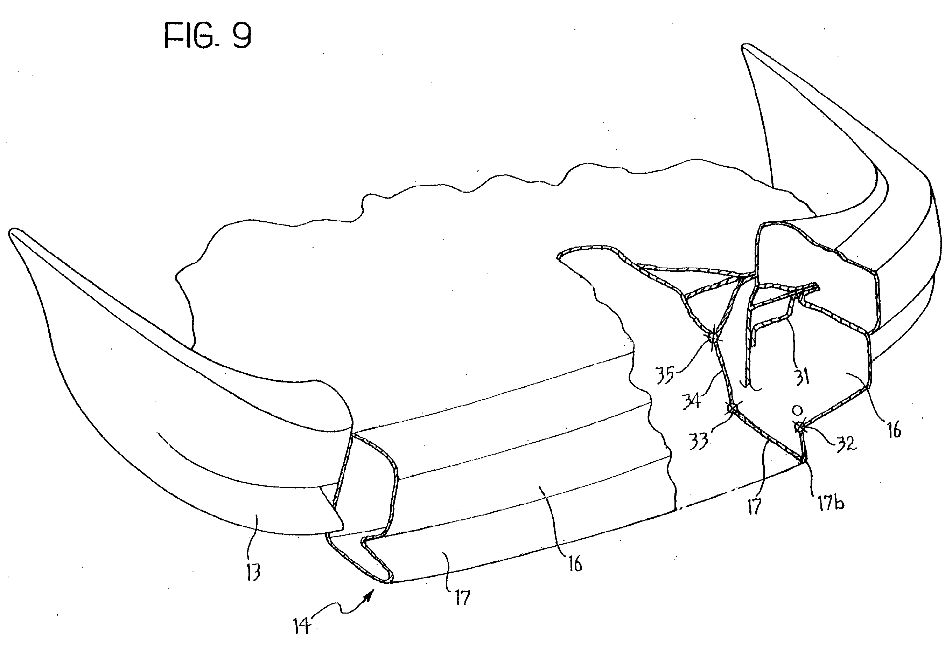

Figure 9 is a partially-sectioned and cut-away view of the bumper in the lowered condition,
Figure 10 is a perspective view of the bumper, partially cut away to show some members for its movement, and
Figure 11 is a schematic, perspective view of further members for the movement of the bumper.

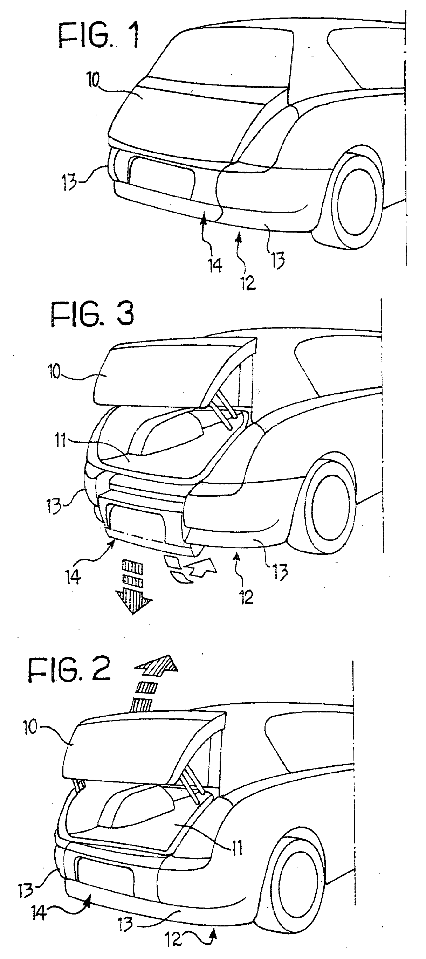

With reference initially to Figures 1 to 3, a motor vehicle has a rear hatch 10 for the closure of a luggage compartment with a load platform 11 and a rear bumper, generally indicated 12. The hatch 10 has an electric lock connected to actuator members (not shown) for automatically raising the hatch from the closed position of Figure 1 to the open position of Figure 2.

The rear bumper 12 comprises two side portions 13 which are fixed to the vehicle body, and a central unit 14 of a length corresponding to the width of the hatch 10.

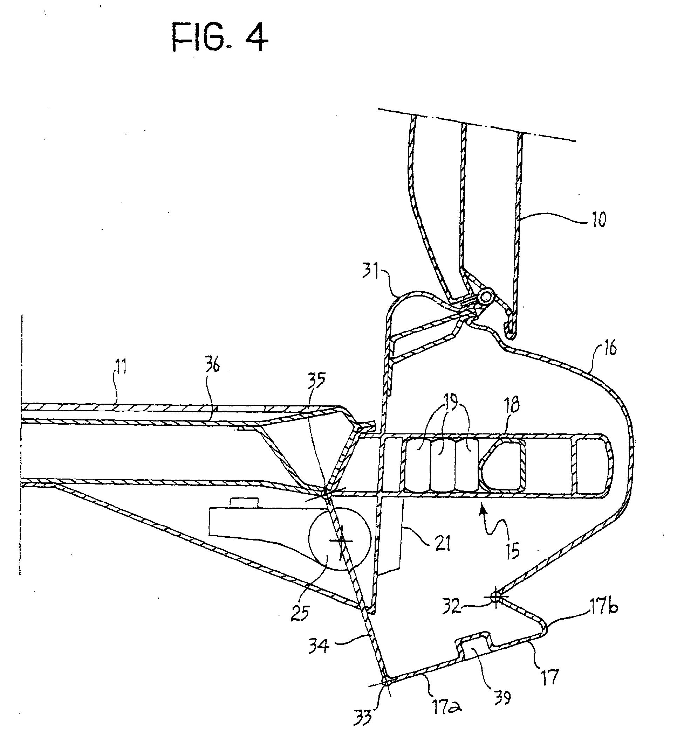

The central unit 14 of the bumper is mounted movably on the vehicle body in order to move between a raised, travelling position (Figure 1) and a lowered position (Figure 3) in which access to the load platform 11 is facilitated.

The central unit 14 comprises a rigid structure 15 mounted for sliding vertically on the vehicle body, and a pair of shells 16, 17 made of plastics material, supported by the structure 15 and constituting the outer rear portion of the central unit.

The structure 15 comprises a main, rigid cross-member 18 which extends horizontally from one end of the central unit 14 to the other; at its opposite ends, the main cross-member 18 is carried in a cantilevered manner on a pair of impact-absorbing elements 19 which are of conventional type and need not therefore be described in detail.

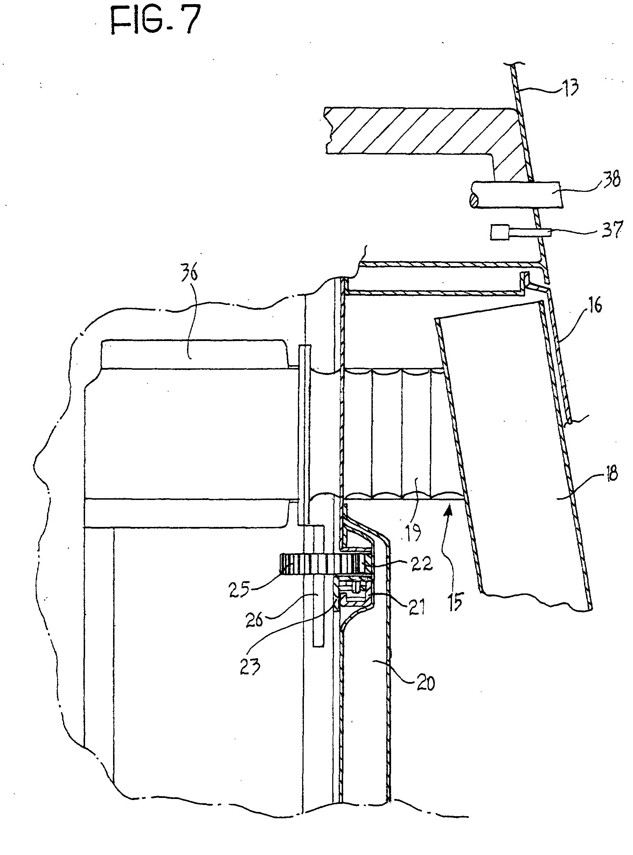

The front end of each impact-absorber 19 is connected rigidly to a second horizontal cross-member 20 (Figure 7) which also extends from one end of the central unit 14 to the other.

A vertical guide 21 and a vertical rack 22 are fixed firmly to the cross-member 20 in the region of each of its ends. The vertical guide 21 slides along a respective fixed vertical guide 23 fixed firmly to the vehicle body; roller elements 24 or equivalent means are interposed between the guides 21 and 23 to take up the play in the longitudinal direction x and in the transverse direction y and to reduce the friction generated during the sliding movement.

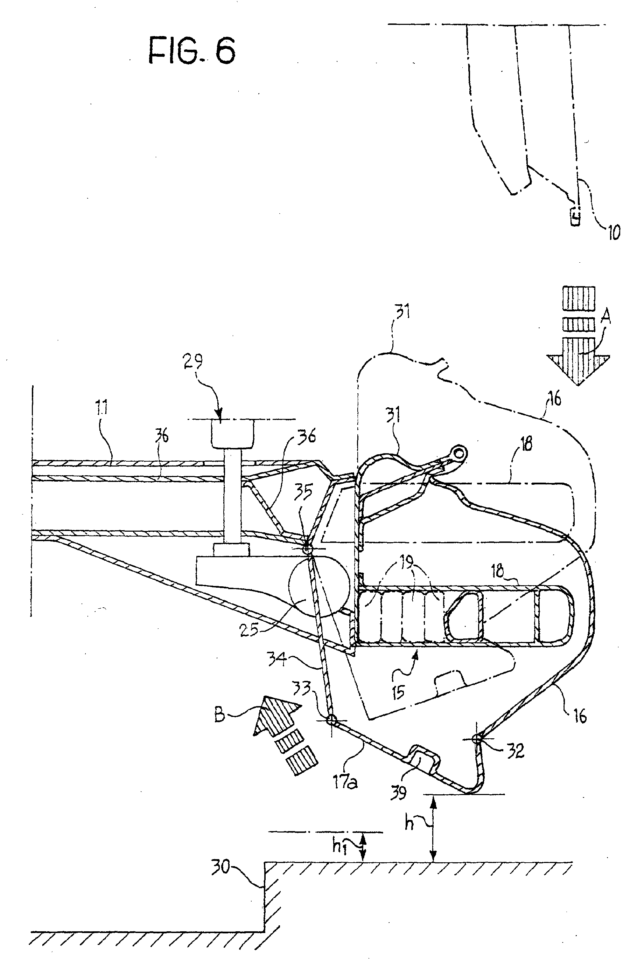

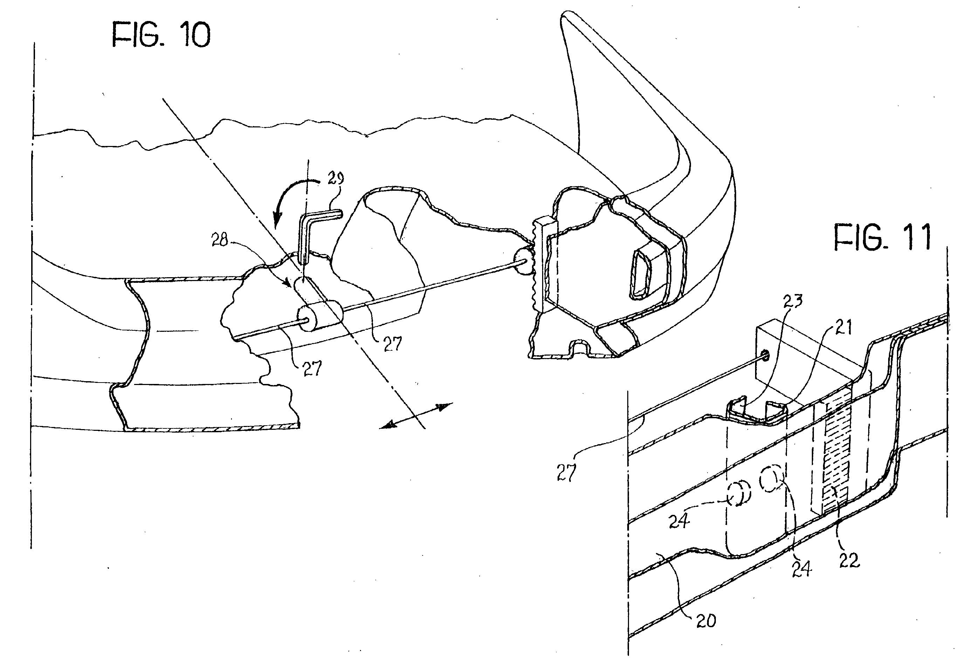

A respective pinion 25, forming part of a movement device mounted on the vehicle body, is engaged on each of the racks 22. Each pinion 25 is rotated about a horizontal axle 26 by a transmission means 27, for example, a Bowden cable, operated by a central electric motor 28. A key for the manual release of the electric motor 28 in the event of a breakdown is indicated 29 in Figures 6 and 10.

An important characteristic of the solution according to the invention is that the outer and lower portion of the central unit 14, in particular, the lower shell 17, is articulated in a manner such that, when the central unit is in the fully lowered position, the distance h of the lower portion of the shell 17 from the ground remains appreciable; as described below, this enables the unit 14 to be lowered fully, even when the vehicle is parked close to a pavement 30.

The upper shell 16 is mounted on the structure 15 in a fixed manner in order to translate together therewith. With particular reference to Figure 6, the upper shell 16 is attached, at the top, to a horizontal bar 31 fixed firmly to the structure 15.

The lower shell 17 is articulated, at separate points 32 and 33, to the upper shell 16 and to an end of an arm 34, respectively, the arm 34 having its opposite end articulated to the vehicle body at 35. It will be noted that the selection to form the two shells 16 and 17 as two separate bodies constitutes a preferred choice but is certainly not essential for the purposes of the implementation of the invention. For example, it would be possible alternatively to produce a one-piece shell having an upper shell portion 16 and a lower shell portion 17 joined together by a flexible portion 32 to allow the lower portion 17 to pivot relative to the upper portion 16 when the upper portion 16 translates upwardly or downwardly, as explained above.

As shown in Figure 6, under the effect of the above-described movement devices, the main cross-member 18 (together with the cross-member 20, the guides 21 and the racks 22) translates upwards or downwards according to the direction of rotation imparted to the pinions 25.

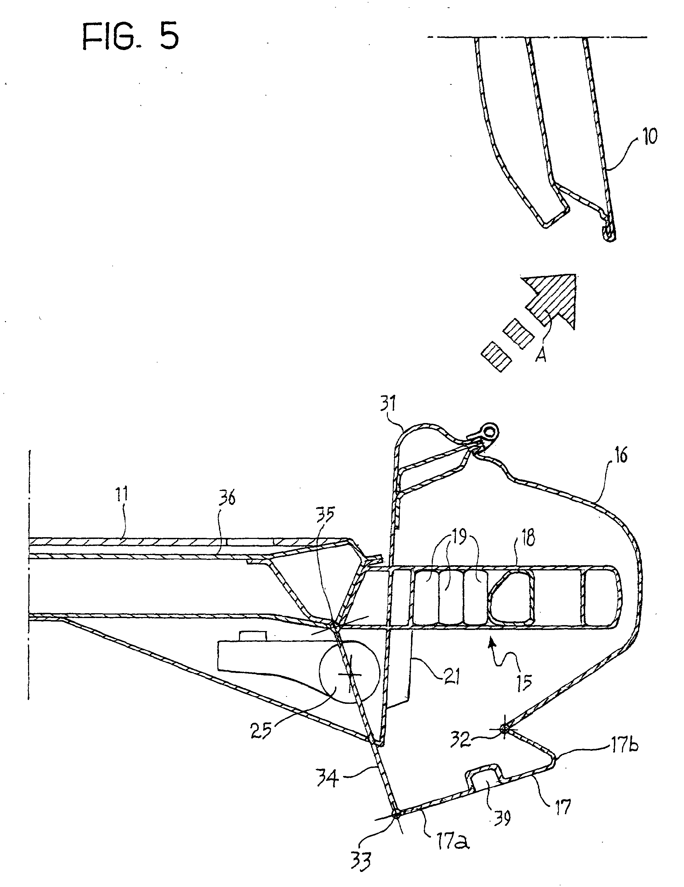

Starting from the configuration of Figure 4, in which the hatch 10 is closed and the central unit 14 is in the raised position, as soon as the hatch lock is released, the hatch is raised automatically (Figure 5). In synchronism with the opening of the hatch, an electronic control unit (not shown) which receives control signals from the lock, activates the electric motor 28 which sets the pinions 25 in rotation by means of the Bowden cables 27 so that the structure 15 descends along the fixed guides 23.

During the downward movement, the upper shell (or shell portion) 16 translates vertically, as indicated by the arrow A in Figure 6, together with the structure 15. During this stage, the lower shell or shell portion 17 performs a combined movement of vertical downward translation and clockwise rotation about the pivot points 35 and 33, as indicated by the arrow B, and is brought to the lowered position shown in solid outline in Figure 6, in which the horizontal bar 31 is at the level of the load platform 11 so as to facilitate the loading and unloading of luggage.

Owing to the fact that the lower shell portion is articulated to the pivoting arm 34 at 33, the end 17a of the shell portion 17 at which it is connected to the arm 34 does not descend to an appreciable extent below the level at which it is disposed when the unit 14 is in the raised position (shown in broken outline).

In the embodiment shown in Figure 6, the minimum distance h from the ground is reached by the point 17b of the lower shell and this distance is in any case considerably greater than that, indicated h1, which the end 17a would reach if the lower shell portion 17 were fixed rigidly to the upper shell portion 16.

Naturally, the minimum distance h from the ground may be even greater than that of the embodiment illustrated if a lower shell portion of a different shape, for example, without the projection represented by the point 17b, is used.

As can be appreciated from Figure 7, the impact-absorbers 19 keep the main cross-member 18 spaced from the guides 21, 23 and from the rack-and-pinion movement members 22, 25 so that, in the event of a low-speed collision, the impact will be transmitted to the side members 36 by the absorbers 19 without causing damage to the members for guiding and moving the structure 15.

With further reference to Figure 7, it will be noted that the towing hitch 37 and the exhaust tail-pipe 38 are arranged laterally in the region of the fixed side portions 13 of the bumper so as not to interfere with the movable unit 14.

In a preferred embodiment of the invention, a radio-frequency sensor 39 is mounted on the lower shell portion 17 of the bumper and is connected to the electronic control unit which controls the movement of the bumper in order to stop the motor 28 automatically and to halt the downward movement of the bumper should a step 30 or other foreign body be disposed within the radius of action of the bumper.

## Claims

1. A rear bumper for a motor vehicle with a rear hatch (10) for access to a load platform (11), in which the bumper (12) has a central portion (14) movable between a raised, travelling position and a lowered position for facilitating access to the load platform, **characterized in that** the central portion comprises:
a rigid structure (15) mounted for sliding vertically on the vehicle body and coupled to drive means (28, 27, 25) mounted on the vehicle for causing the structure (15) to slide between the lowered and raised positions, and
a pair of shell-like portions (16, 17) which are supported by the structure (15) and constitute the outer rear portion of the central unit (14), and of which an upper shell portion (16) is fixed to the structure (15) in order to translate together therewith, and a lower shell portion (17) is articulated, at separate points (32, 33), to the upper shell portion (16) and to an end of at least one arm (34), respectively, the arm (34) having its opposite end articulated (35) to the vehicle body.

2. A bumper according to Claim 1 in which the shell-like portions (16, 17) are formed as a unitary element having a flexible joining portion (32) for allowing the lower portion (17) to pivot relative to the upper portion (16).

3. A bumper according to Claim 1 in which the shell-like portions (16, 17) are formed as separate elements, connected by an articulation (32) for allowing the lower portion (17) to pivot relative to the upper portion (16).

4. A bumper according to Claim 1 in which the rigid structure (15) includes a rigid, horizontal cross-member (18) mounted at the rear in a cantilevered manner, by means of impact-absorbers (19).

5. A bumper according to Claim 1 in which, in the raised, travelling position, the impact-absorbers (19) are aligned with side members (36) of the vehicle body.

6. A bumper according to Claim 1 in which a radio-frequency sensor device (39) is mounted on the lower shell portion (17) and can automatically stop the downward movement of the structure (15) should a foreign body (30) be disposed in the radius of action of the bumper.
